Europäisches Patentamt

European Patent Office

Office européen des brevets

(11) Veröffentlichungsnummer: **0 232 502 B1**

# (12) EUROPÄISCHE PATENTSCHRIFT

(45) Veröffentlichungstag der Patentschrift: **04.03.92**

(21) Anmeldenummer: **86117004.1**

(22) Anmeldetag: **06.12.86**

(51) Int. Cl.⁵: **C08K 3/04**, C08L 27/06,
B42D 15/02, G06K 19/06,
B32B 27/00

Die Akte enthält technische Angaben, die nach
dem Eingang der Anmeldung eingereicht wurden
und die nicht in dieser Patentschrift enthalten sind.

(54) **Identifikations-Karten.**

(30) Priorität: **14.12.85 DE 3544385**

(43) Veröffentlichungstag der Anmeldung:
**19.08.87 Patentblatt 87/34**

(45) Bekanntmachung des Hinweises auf die
Patenterteilung:
**04.03.92 Patentblatt 92/10**

(84) Benannte Vertragsstaaten:
**AT BE CH DE ES FR GB GR IT LI LU NL SE**

(56) Entgegenhaltungen:
**EP-A- 0 101 667**
**EP-A- 0 138 121**
**DE-A- 1 904 158**
**DE-C- 3 151 407**

(73) Patentinhaber: **UNILEVER NV**
**Burgemeester s'Jacobplein 1 P.O. Box 760**
**NL-3000 DK Rotterdam(NL)**

(84) Benannte Vertragsstaaten:
**BE CH DE ES FR GR IT LI LU NL SE AT**

(73) Patentinhaber: **UNILEVER PLC**
**Unilever House Blackfriars P.O. Box 68**
**London EC4P 4BO(GB)**

(84) Benannte Vertragsstaaten:
**GB**

(72) Erfinder: **Schledorn, Martin**
**Föhrenbergstrasse 7**
**W-8551 Kirchehrenbach(DE)**

(74) Vertreter: **Hutzelmann, Gerhard et al**
**Duracher Strasse 22**
**W-8960 Kempten(DE)**

## Beschreibung

Die Erfindung bezieht sich auf eine PVC-Folie zum Herstellen von Identifikations-Karten, die mit Hilfe eines Laserstrahles zu beschriften bzw. markieren sind.

Aus der EP-OS 0138121 ist eine Formmasse auf der Basis von Vinylchloridpolymerisaten zur Herstellung von Folien für die Bereitung von fälschungssicheren Wertpapieren bekannt. Dieser Formmasse wird neben 5 bis 20% Schlagzähmodifizierungsmittel noch 0,5 bis 25% pulverisierte reine Cellulose beigegeben.

Insbesondere für Identifikations-Karten ist dies aber ungünstig, da durch die Cellulose das Wasseraufnahmevermögen der Karte stark vermehrt wird. Wird eine solche Karte Feuchtigkeit oder gar Wasser ausgesetzt, so wird sie trübe und unleserlich.

In DE 3 151 407 C1 wird eine Laser bedruckbare Identifikationskarte beschrieben. Die Deckschicht dieser Karte besteht aus einer transparenten PVC-Folie, die mit einer aus Kunststoff oder Papier bestehenden Schicht hinterlegt ist. Die im sichtbaren Wellenbereich transparente PVC-Deckschicht besitzt bei einer Dicke von 0,094 mm bei 1064 nm eine deutliche Absorptionskante, die der Wellenlänge des eingestrahlten Laserlichtes entspricht. Zur einwandfreien Markierung der PVC-Folie sind hohe Laseranregungsenergien erforderlich.

Der Erfindung liegt die Aufgabe zugrunde, eine PVC-Folie der eingangs genannten Art so auszugestalten, daß sie einwandfrei durch einen Laserstrahl beschriftet bzw. markiert werden kann wobei deutlich geringere Laserstrahlenergien erforderlich sind.

Die Aufgabe wird durch die Bereitstellung einer Identifikationskarte gelöst, die dadurch gekennzeichnet ist, daß in die PVC-Deckschicht Ruß in einer Konzentration von 0,1 bis 20g je 100kg Polyvinylchlorid eingearbeitet wird.

Als besonders günstig hat es sich erwiesen, wenn jeweils 100kg PVC-Pulver 0,6g Ruß beigemischt sind.

Eine solche PVC-Folie läßt sich hervorragend mit einem Laserstrahl beschriften. Selbst Bilder sind damit mit verhältnismäßig großer Auflösung produzierbar. Trotzdem ist die Folie transparent und behält ihre ursprünglichen guten Eigenschaften.

Bei einer erfindungsgemäßen Identifikations-Karte ist die den Ruß enthaltende PVC-Folie als Deckschicht vorgesehen, welche mit einer weitgehend undurchsichtigen Lage hinterlegt ist.

Bei einer so aufgebauten Karte wird nur die transparente Deckschicht mit Hilfe des Laserstrahles mit der vorgesehenen Information versehen. Die undurchsichtige zweite Lage sorgt dabei für einen ausreichenden Kontrast.

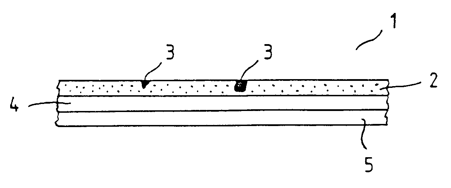

In der Zeichnung ist die Erfindung anhand eines Ausführungsbeispiels veranschaulicht. Die Figur zeigt dabei einen Schnitt durch eine Identifikations-Karte.

Die Identifikations-Karte 1 ist aus drei Lagen aufgebaut, wobei als oberste Lage eine PVC-Folie 2 vorgesehen ist, die 0,6g Ruß pro 100kg PVC-Pulver enthält. Mit 3 sind Markierungen in dieser Folie bezeichnet, die mit Hilfe eines Laserstrahles eingebrannt sind. Diese PVC-Folie 2 ist mit einer Mittellage 4 unterlegt, die aus weiß eingefärbtem PVC besteht. Als unterste Lage ist wieder eine transparente Folie 5 vorgesehen.

Als Mittellage könnte aber auch Papier oder eine Metallschicht vorgesehen sein.

## Patentansprüche

1. Identifikations-Karte mit einer Deckschicht(2) aus Polyvinylchlorid-Folie, welche durch eine weitgehend undurchsichtige Lage(4) hinterlegt ist und eine durch Laserstrahlen erzeugte Beschriftung bzw. Markierung(3) aufweist, **dadurch gekennzeichnet,** daß in die PVC-Deckschicht(2) Ruß in einer Konzentration von 0,1 bis 20g je 100kg Polyvinylchlorid eingearbeitet ist.

2. Identifikations-Karte nach Anspruch 1, **dadurch gekennzeichnet,** daß der Ruß in einer Konzentration von 0,6g je 100kg Polyvinylchlorid in die Deckschicht(2) eingearbeitet ist.

## Claims

1. An identity card with a top layer (2) made from polyvinyl chloride film, which is backed by a largely non-transparent layer (4) and which has inscriptions or marks (3) produced with the help of laser beams, wherein the PVC top layer (2) incorporates carbon black in a concentration of 0.1 to 20 g per 100 kg of polyvinyl chloride.

2. An identity card according to claim 1, wherein the carbon black is incorporated in the top layer (2) in a concentration of 0.6 g per 100 kg of polyvinyl chloride.

## Revendications

1. Carte d'identification avec une couche de recouvrement (2), constituée d'une feuille de chlorure de polyvinyle, qui est doublée d'une couche sensiblement opaque (4) et qui présente une inscription ou marquage (3) produite par rayon laser, **caractérisée** en ce qu'on incorpore dans la couche de recouvrement (2) en CPV du noir de carbone dans une concentration de 0,1 à 20g pour 100kg de chlorure de polyvinyle.

2. Carte d'identification selon la revendication 1, **caractérisée** en ce que le noir de carbone est incorporé dans la couche de recouvrement (2) dans une concentration de 0,6g pour 100kg de chlorure de polyvinyle.